(19) Europäisches Patentamt
European Patent Office
Office européen des brevets

(11) EP 4 299 668 A1

(12) EUROPEAN PATENT APPLICATION

(43) Date of publication:
**03.01.2024 Bulletin 2024/01**

(21) Application number: **22182544.1**

(22) Date of filing: **01.07.2022**

(51) International Patent Classification (IPC):
***C08L 23/16*** *(2006.01)* ***C08L 23/08*** *(2006.01)*
***C08F 210/02*** *(2006.01)* ***C08F 210/06*** *(2006.01)*
***C08L 51/06*** *(2006.01)* ***C08F 4/6592*** *(2006.01)*
***C08F 2/00*** *(2006.01)*

(52) Cooperative Patent Classification (CPC):
(C-Sets available)
**C08F 210/06; C08F 110/06;** C08F 4/65912;
C08F 4/65916; C08F 2420/07; C08L 23/14 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **GRESTENBERGER, Georg**
  **4021 Linz (AT)**
- **KLIMKE, Katja**
  **4021 Linz (AT)**

(74) Representative: **Maiwald GmbH**
**Elisenhof**
**Elisenstraße 3**
**80335 München (DE)**

# (54) GLASS FIBER REINFORCED POLYPROPYLENE COMPOSITION

(57) Glass fiber reinforced polypropylene based composition including propylene-1-butene random copolymer or ethylene-propylene random copolymer, high pressure polyethylene acrylate copolymer and short glass fibers.

EP 4 299 668 A1

(52) Cooperative Patent Classification (CPC): (Cont.)

C-Sets
**C08F 110/06, C08F 2/001;**
**C08F 110/06, C08F 4/6492;**
**C08F 210/06, C08F 4/65927;**
C08F 210/06, C08F 210/08, C08F 2500/27,
C08F 2500/12;
C08F 210/06, C08F 210/08, C08F 2500/27,
C08F 2500/12, C08F 2500/35, C08F 2500/34;
C08F 210/06, C08F 210/16, C08F 2500/27,
C08F 2500/12;
C08F 210/06, C08F 210/16, C08F 2500/27,
C08F 2500/12, C08F 2500/35, C08F 2500/34;
C08L 23/14, C08K 7/14, C08L 23/08, C08L 51/06

## Description

The present invention concerns glass fiber reinforced materials-suitable for applications having high demands as to tensile and elongation properties.

## Background

Fiber reinforced composition comprising metallocene derived polypropylene random copolymer together with glass fibers and adhesion promoter are known from EP 3105287. However, the strain at break (%) in a tensile test is not sufficient for demanding applications. Moreover, there was particularly a long felt need in the automotive industry for compositions being suitable for interior parts which have an extremely soft touch. Nowadays interior parts of upper class passenger cars are entirely assessed by their touch, whereby customers tend to require leather-like touch and simultaneously stiffness as conventionally foreseen for such articles. This objective is even more important since leather-polymer composites make recycling more complex.

## Summary of the invention

The present invention insofar provides

a glass fiber reinforced polypropylene based composition having a melt flow rate (ISO1133, 2.16 kg; 230°C) of 1.0 to 50 g/10min including

a) 40 to 55 wt.-% propylene-1-butene or ethylene-propylene random copolymer having

aa) a melting temperature of 135 to 150°C (DSC; ISO11357-3);
ab) a content of units derived from 1-butene of 3.0 to 9.0 wt.-% or from ethylene of 2.0 to 6.0 wt.-% (determined by NMR spectroscopy)
ac) a melt flow rate $MFR_2$ (ISO1133, 2.16 kg; 230°C) of 8.0 to 120 g/10min

b) 20 to 40 wt.-% of a high pressure polyethylene acrylate copolymer having a density of 910 to 935 kg/$m^3$ optionally containing units derived from vinyl-trimethoxy-silane;
c) 10 to 30 wt.-% short glass fibers
d) 0.5 - 2.5 wt.% coupling agent;

all amounts with respect to the total weight of the glass fiber reinforced polypropylene based composition.

The present invention further provides an article comprising the glass fiber reinforced polypropylene based composition.

The present invention further concerns the use of the glass fiber reinforced polypropylene based composition for replacing leather-polymer composites.

It is self-explaining that the melting temperature of the propylene-1-butene or ethylene-propylene random copolymer can be measured at the total glass fiber reinforced polypropylene based composition, since there is no substantial overlap with the melting point of the high pressure polyethylene acrylate copolymer having a density of 910 to 935 kg/$m^3$ optionally containing units derived from vinyl-trimethoxy-silane.

The propylene random copolymer as included in the inventive glass fiber reinforced polypropylene based composition can be a propylene-1-butene random copolymer in a first embodiment or an ethylene-propylene random copolymer in a second embodiment. The first embodiment, i.e. the propylene-1-butene copolymer is preferred due to better stiffness.

The glass fiber reinforced polypropylene based composition as described herein preferably comprises 0.05 to 0.9 wt.-% slip agent with respect to the total weight of the glass fiber reinforced polypropylene based composition. More preferably, the slip agent is an erucamide containing wax.

In a further independently preferred aspect, the high pressure polyethylene acrylate copolymer contains units derived from butyl acrylate.

The glass fiber reinforced polypropylene based composition according to present invention more preferably includes a high pressure polyethylene acrylate copolymer containing units derived from vinyl-trimethoxy-silane.

Even more preferably, the glass fiber reinforced polypropylene based composition as described includes a high pressure polyethylene acrylate copolymer containing

a) 7.0 to 12.0 wt.-% of units derived from butyl acrylate; and/or
b) 0.1 to 4.0 wt.-% of units derived from vinyl-trimethoxy-silane.

The amount thereof can be easily detected by $^1$H-NMR.

In another aspect, the glass fiber reinforced polypropylene based composition is obtainable by compounding a glass fiber having a fiber length of 2 to 5 mm, i.e. the fiber length is the length before compounding.

The glass fiber reinforced polypropylene based composition as described herein usually will also contain carbon black pigment. Carbon black pigment is mixed in form of a masterbatch, whereby the base polymer as described herein is also suitable as the carrier polymer for carbon black.

It is preferred that the glass fiber reinforced polypropylene based composition according to the present invention includes a propylene-1-butene or ethylene-propylene random copolymer having a melting temperature of 141 to 148°C.

It is further preferred that the glass fiber reinforced polypropylene based composition according to the present invention includes a propylene-1-butene random copolymer having a content of units derived from 1-butene of 4.0 to 6.0 wt.-%. In addition to that, it is even more preferred that said propylene-1-butene random copolymer is the only random propylene copolymer comprised in the glass fiber reinforced polypropylene based composition. Most preferably, the propylene-1-butene random copolymer having a content of units derived from 1-butene of 4.0 to 6.0 wt.-% has a melting temperature of 141 to 148°C.

In yet a further aspect, the glass fiber reinforced polypropylene based composition as described herein has at least two melting points, a first melting point within the range of 95 to 103°C and a second melting point within the range of 135 to 150°C . The glass fiber reinforced polypropylene based composition preferably has a tensile strength of at least 50.0 MPa and simultaneously a strain at break of at least 5.0 %, as determined in a tensile test on injection-molded specimens.

It is preferred that the glass fiber reinforced polypropylene based composition as described herein comprises c) 0.05 to 0.9 wt.-% slip agent with respect to the total weight of the glass fiber reinforced polypropylene based composition, wherein the slip agent is an erucamide containing wax.

In yet a further aspect, the present invention concerns an article comprising the glass fiber reinforced polypropylene based composition as described herein. It is particularly preferred that the glass fiber reinforced polypropylene based composition is present in an amount of at least 98.0 wt.-% with respect to the total weight of the article. It is also preferred that the article is automotive interior article. The present invention is also concerned with the use of the glass fiber reinforced polypropylene based composition as described herein for replacing leather-polymer composites.

**Detailed description**

In the following additionally preferred aspects are discussed. The present invention preferably is concerned with

a glass fiber reinforced polypropylene based composition having a melt flow rate (ISO1133, 2.16 kg; 230°C) of 1.0 to 50 g/10min including

a) 40 to 55 wt.-% propylene-1-butene random copolymer having

aa) a melting temperature of 135 to 150°C (DSC; ISO11357-3);
ab) a content of units derived from 1-butene of 3.0 to 9.0 wt.-% (determined by NMR spectroscopy)
ac) an melt flow rate (ISO1133, 2.16 kg; 230°C) of 8.0 to 120 g/10min

b) 20 to 40 wt.-% of a high pressure polyethylene acrylate copolymer having a density of 910 to 935 kg/m$^3$ optionally containing units derived from vinyl-trimethoxy-silane;
c) 10 to 30 wt.-% short glass fibers;
d) 0.5 - 2.5 wt.% coupling agent;
e) 0.05 to 0.9 wt.-% slip agent;

all amounts with respect to the total weight of the glass fiber reinforced polypropylene based composition.

The present invention preferably is concerned with

a glass fiber reinforced polypropylene based composition having a melt flow rate (ISO1133, 2.16 kg; 230°C) of 1.0 to 50 g/10min including

a) 40 to 55 wt.-% propylene-1-butene random copolymer having

aa) a melting temperature of 141 to 148°C (DSC; ISO11357-3);
ab) a content of units derived from 1-butene of 4.0 to 6.0 wt.-% (determined by NMR spectroscopy)
ac) an melt flow rate (ISO1133, 2.16 kg; 230°C) of 8.0 to 120 g/10min

b) 20 to 40 wt.-% of a high pressure polyethylene acrylate copolymer having a density of 910 to 935 kg/$m^3$ optionally containing units derived from vinyl-trimethoxy-silane;
c) 10 to 30 wt.-% short glass fibers;
d) 0.5 - 2.5 wt.% coupling agent;
e) 0.05 to 0.9 wt.-% slip agent;

all amounts with respect to the total weight of the glass fiber reinforced polypropylene based composition.

In yet a further particularly preferred embodiment, the present invention is concerned with

a glass fiber reinforced polypropylene based composition having a melt flow rate (ISO1133, 2.16 kg; 230°C) of 1.0 to 50 g/10min including

a) 40 to 55 wt.-% propylene-1-butene random copolymer having

aa) a melting temperature of 141 to 148°C (DSC; ISO11357-3);
ab) a content of units derived from 1-butene of 4.0 to 6.0 wt.-% (determined by NMR spectroscopy)
ac) an melt flow rate (ISO1133, 2.16 kg; 230°C) of 8.0 to 120 g/10min

b) 20 to 40 wt.-% of a high pressure polyethylene acrylate copolymer having a density of 910 to 935 kg/$m^3$ containing units derived from vinyl-trimethoxy-silane;
c) 10 to 30 wt.-% short glass fibers;
d) 0.5 - 2.5 wt.% coupling agent;
e) 0.05 to 0.9 wt.-% slip agent;

all amounts with respect to the total weight of the glass fiber reinforced polypropylene based composition.

For this embodiment, the high pressure polyethylene acrylate copolymer preferably contains

7.0 to 12.0 wt.-% of units derived from butyl acrylate; and/or
0.1 to 4.0 wt.-% of units derived from vinyl-trimethoxy-silane.

The above mentioned particularly preferred embodiments can be combined with further aspects from the specification if not mentioned otherwise.

**Short Glass fiber (GF)**

The short glass fibers as used herein have an average (D50) fiber length (before compounding) of 1 to 10 mm, preferably 2 to 5 mm. The aspect ratio preferably is from 200 to 400 and more preferably from 250 to 350.

**Coupling agents**

Coupling agents for glass fiber reinforced polyolefins are known in the art and commercially available. Those resins are usually reactively modified, like grafted, polypropylenes made by reactive extrusion, like grafted with maleic anhydride (PP-g-MAH). Suitable products include Scona TPPP 8112 and Scona TPPP 9112 of Byk-Kometra, Germany.

**Process and catalyst for propylene-1-butene or ethylene-propylene random copolymer (base polymer)**

For the preparation of the propylene-1-butene or ethylene-propylene random copolymer specific catalyst systems should be used. Such catalyst systems are obtainable by a metallocene catalyst complex and a cocatalyst as described in the following.
Preferred complexes of the metallocene catalyst include:

rac-dimethylsilanediylbis[2-methyl-4-(3’,5’-dimethylphenyl)-5-methoxy-6-tert-butylinden-1-yl] zirconium dichloride,

rac-anti-dimethylsilanediyl[2-methyl-4-(4'-tert-butylphenyl)-inden-1-yl][2-methyl-4-(4'-tert-butylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride.

Cocatalyst

To form an active catalytic species it is necessary to employ a cocatalyst as is well known in the art. According to the present invention a cocatalyst system comprising a boron containing cocatalyst and an aluminoxane cocatalyst is used in combination with the above defined metallocene catalyst complex.
The aluminoxane cocatalyst can be one of formula (I):

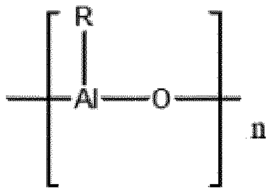

(I)

where n is from 6 to 20 and R has the meaning below.
Aluminoxanes are formed on partial hydrolysis of organoaluminum compounds, for example those of the formula AlR3, AlR2Y and Al2R3Y3 where R can be, for example, C1-C10-alkyl, preferably C1-C5-alkyl, or C3-C10-cycloalkyl, C7-C12-arylalkyl or - alkylaryl and/or phenyl or naphthyl, and where Y can be hydrogen, halogen, preferably chlorine or bromine, or C1-C10-alkoxy, preferably methoxy or ethoxy. The resulting oxygen-containing aluminoxanes are not in general pure compounds but mixtures of oligomers of the formula (I).
The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content. Also a boron containing cocatalyst is used in combination with the aluminoxane cocatalyst.
The catalyst complex ideally comprises a co-catalyst, certain boron containing cocatalysts are preferred. Especially preferred borates of use in the invention therefore comprise the trityl, i.e. triphenylcarbenium, ion. Thus the use of Ph3CB(PhF5)4 and analogues therefore are especially favored.
The catalyst system of the invention is used in supported form. The particulate support material used is silica or a mixed oxide such as silica-alumina, in particular silica. The use of a silica support is preferred. The skilled man is aware of the procedures required to support a metallocene catalyst. In a preferred embodiment, the catalyst system corresponds to the ICS3 of WO 2020/239602 A1.
The propylene-1-butene or ethylene-propylene random copolymer according to the present invention is made by a multistage process. It is highly recommendable to use a combination of loop reactor(s) and gas phase reactor(s). Usually the first reactor will be a loop reactor. It is preferred to use a loop - gas phase reactor 1 - gas phase reactor 2 combination. In a preferred embodiment a polypropylene 1-butene copolymer is produced in a first loop and a first gas phase reactor. It is particularly preferential to use a C4 / C3 ratio of 30 to 50 mol/kmol in a first loop reactor. It is further particularly preferred to use C4 / C3 ratio of 28 to 42 mol/kmol in a first gas phase reactor.
Generally, the quantity of catalyst used will depend upon the nature of the catalyst, the reactor types and

conditions and the properties desired for the polymer product. As is well known in the art hydrogen can be used for controlling the molecular weight of the polymer.

**High pressure polyethylene acrylate copolymer**

High pressure polyethylene acrylate copolymer having a density of 910 to 935 $kg/m^3$ optionally containing units derived from vinyl-trimethoxy-silane are commercially available. These are produced in tubular or autoclave high pressure processes without the use of a catalyst as described by Jeremic (Polyethylene, in: Ullmann's Encyclopedia of Industrial Chemistry, 2014). Copolymers with acrylates like methyl acrylate (EMA), ethyl acrylate (EEA), butyl acrylate (EBA) and methyl methacrylate (EMMA) are described specifically in chapter 2.5 of said overview. Suitable processes including the copolymerization with vinyl-trimethoxy-silane are described for example in EP 1923404 A1, WO 2005/023908 A1 and EP 3035344 A1.

Typical commercial and preferred products are Borealis OE4117 and Borealis OE4110SI supplied by Borealis AG, Austria. It is preferred that the glass fiber reinforced polypropylene based composition as described herein does not include an ethylene-vinyl acetate (EVA) based copolymer.

**Additives**

Typical additives are acid scavengers, antioxidants, colorants, light stabilizers, plasticizers, slip agents, anti-scratch agents, dispersing agents, processing aids, lubricants, pigments, and the like.

Such additives are commercially available and for example described in "Plastic Additives Handbook", 6th edition 2009 of Hans Zweifel (pages 1141 to 1190). Furthermore, the term "additives (AD)" according to the present invention also includes carrier materials, in particular polymeric carrier materials.

It is preferred that the amount of additives is not higher than 5.0 wt.-%, like in the range of 0.1 to 4.0 wt.-%, with respect to the glass fiber reinforced polypropylene based composition.

**Experimental**

**Methods**

**a) $MFR_2$ (230 °C for polypropylene polymers; 190°C for polyethylene polymers)** is measured according to ISO 1133 (230 °C, 2.16 kg load).

**b) Quantification of microstructure (regio-defects) by NMR spectroscopy**

Quantitative nuclear-magnetic resonance (NMR) spectroscopy was used to quantify the polypropylene copolymer.

Quantitative $^{13}C\{^1H\}$ NMR spectra were recorded in the solution-state using a Bruker Advance III 400 NMR spectrometer operating at 400.15 and 100.62 MHz for 1H and 13C respectively. All spectra were recorded using a $^{13}C$ optimised 10 mm extended temperature probehead at 125 °C using nitrogen gas for all pneumatics. Approximately 200 mg of material was dissolved in 1,2-tetrachloroethane-d2 (TCE-d2). To ensure a homogenous solution, after initial sample preparation in a heat block, the NMR tube was further heated in a rotatary oven for at least 1 hour. Upon insertion into the magnet, the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectrum.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The presence of 2,1 erythro regio-defects was indicated by the presence of the two methyl sites at 17.7 and 17.2 ppm and confirmed by other characteristic sites. Characteristic signals corresponding to other types of regio-defects

were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{21e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e] \text{ mol-\%} = 100 * (P21e / Ptotal)$$

**c) Comonomer content of 1-butene for a propylene 1-butene copolymer (P)**

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm. Basic Comonomer Content Method Spectral Analysis Method Characteristic signals corresponding to the incorporation of 1-butene were observed and the comonomer content quantified in the following way.

The amount 1-butene incorporated in PPBPP isolated sequences was quantified using the integral of the αB2 sites at 43.6 ppm accounting for the number of reporting sites per comonomer:

$$B = I_{\alpha}/2$$

The amount of 1-butene incorporated in PPBBPP double consecutively sequences was quantified using the integral of the ααB2B2 site at 40.5 ppm accounting for the number of reporting sites per comonomer:

$$BB = 2 * I_{\alpha\alpha}$$

When double consecutive incorporation was observed the amount of 1-butene incorporated in PPBPP isolated sequences needed to be compensated due to the overlap of the signals αB2 and αB2B2 at 43.9 ppm:

$$B=(I_{\alpha}-2*I_{\alpha\alpha})/2$$

The total 1-butene content was calculated based on the sum of isolated and consecutively incorporated 1-butene:

$$B_{total}=B+BB$$

The amount of propene was quantified based on the main Sαα methylene sites at 46.7 ppm and compensating for the relative amount of αB2 and αB2B2 methylene unit of propene not accounted for (note B and BB count number of butane monomers per sequence not the number of sequences):

$$P_{total}=I_{S\alpha\alpha}+B+BB/2$$

The total mole fraction of 1-butene in the polymer was then calculated as:

$$f_B=(B_{total}/(B_{total}+P_{total})$$

The full integral equation for the mole fraction of 1-butene in the polymer was:

$$f_B=(((I_{\alpha}-2*I_{\alpha\alpha})/2)+(2*I_{\alpha\alpha}))/I_{S\alpha\alpha}+((I_{\alpha}-2*I_{\alpha\alpha})/2)+((2*I_{\alpha\alpha})/2))+((I_{\alpha}-2*I_{\alpha\alpha})/2)+(2*I_{\alpha\alpha}))$$

This simplifies to:

$$f_B=(I\alpha/2+I\alpha\alpha)/(I_{S\alpha\alpha}+I\alpha+I_{\alpha\alpha})$$

The total comonomer incorporation of 1-butene in mole percent was calculated from the mole fraction in the usual manner:

$$B[\text{mol-\%}]=100*f_B$$

The total comonomer incorporation of 1-butene in weight percent was calculated from the mole fraction in the standard manner:

$$B[\text{wt.-\%}]=100*(f_B*56.11)/((f_B*56.11)+((1-f_B)*42.08))$$

**d) Determination of acrylate and VTMS content in high pressure copolymer**

Fourier transform infrared (FTIR) spectroscopy was used for both determining the butyl acrylate (BA) and vinyl-trimethoxy-silane (VTMS) content of the high pressure polyethylene acrylate copolymer.

For butyl acrylate (BA), FTIR is done on a compression molded plaque of the polymer to be analysed, and the content is calculated from the ratio between the BA peak at 3450 $cm^{-1}$ and the PE peak at 2020 $cm^{-1}$. The method is calibrated by $^{13}C\{^1H\}$ NMR spectroscopy in a concentration range between 6 and 27 wt.-% of BA. Alternately, the BA content can also be determined by $^{13}C\{^1H\}$ NMR spectroscopy in solution directly. Analogous methods can be applied for vinyl acetate and other acrylates.

For vinyl-trimethoxy-silane (VTMS), FTIR is done FTIR is done on a compression molded plaque of the polymer to be analysed, and the content is calculated from the ratio between the Si-O peak at 1095 $cm^{-1}$ and the PE peak at 2664 $cm^{-1}$. The method is calibrated by $^{13}C\{^1H\}$ NMR spectroscopy. Alternately, it can be calculated from the elementary silicon content as determined by X-ray fluorescence (XRF), considering Mw[Si] = 28.0855 g/mol and Mw[VTMS] = 148.23 g/mol.

e) **Melting temperature $T_m$ and crystallization temperature $T_c$**

The melting temperature $T_m$ was determined by differential scanning calorimetry (DSC) according to ISO 11357-3 with a TA-Instruments 2920 Dual-Cell with RSC refrigeration apparatus and data station. A heating and cooling rate of 10 °C/min was applied in a heat/cool/heat cycle between +23 and +210 °C. The crystallization temperature ($T_c$) was determined from the cooling step, while melting temperature ($T_m$) and melting enthalpy ($H_m$) are being determined in the second heating step.

**f) Tensile tests**

The tensile modulus, the tensile strength and the elongation at break were measured at 23 °C according to ISO 527-2 (cross head speed 1 mm/min for tensile modulus, 50 mm/min for others) using injection molded specimens molded at 230 °C according to ISO 527-2(1B), produced according to EN ISO 1873-2 (dog 10 bone shape, 4 mm thickness).

**g) Soft-Touch**

Soft-touch and leather-similarity was evaluted by a well trained panel of three persons.

**Examples**

**Catalyst preparation:**

The catalyst used in the Inventive Examples IE1 to IE4 has been prepared following the procedure described in WO 2013/007650 A1 for catalyst E2, by adjusting the metallocene and MAO amounts in order to achieve the Al/Zr ratios indicated in table 1. The catalyst has been off-line pre-polymerized with propylene, following the procedure described in WO 2013/007650 A1 for catalyst E2P.
The complex used was rac-anti-Me2Si(2-Me-4-(p-iBuPh)-Ind)(2-Me-4-Ph-5-OMe-6-iBu- Ind)ZrCl2.

Degree of off-line pre-polymerization 3.3 g/g
Al/Zr molar ratio in catalyst 431 mol/mol

Metallocene complex content of off-line pre-polymerized catalyst 0.696 wt.%.
**Preparation of propylene-1-butene or ethylene-propylene random copolymer (base polymer)** having a melting temperature (Tm) within the range of 135 to 150 °C and a content of units derived from 1-butene of 3.0 to 9.0 wt.-% or a content of units derived from ethylene of 2.0 to 6.0 wt.-% and a melt flow rate of 8 to 120 g/10min.
Conditions are shown the Table below.

| | unit | Base polymer A for IE1 & CE1 | Base polymer B for IE2, IE4 & CE2 | Base polymer C for IE3 | Base polymer D for CE3 |
|---|---|---|---|---|---|
| **Prepolymerization** | | | | | |
| Catalyst feed | kg/h | 1.4 | 3.2 | 2.9 | 3.3 |
| Temperature | °C | 20 | 20 | 20 | 20 |
| $H_2/C_3$ ratio | mol/kmol | 0.05 | 0.03 | 0.03 | 0.03 |
| Residence time | h | 0.32 | 0.33 | 0.33 | 0.33 |
| | | | | | |
| **Loop** | | | | | |
| Temperature | °C | 70 | 68 | 68 | 68 |
| Pressure | kPa | 4860 | 4970 | 4930 | 4923 |
| Split | % | 58 | 46 | 52 | 47 |

(continued)

| **Loop** | | | | | |
|---|---|---|---|---|---|
| Residence time | h | 0.39 | 0.46 | 0.48 | 0.51 |
| $H_2/C_3$ ratio | mol/kmol | 0.14 | 0.13 | 0.23 | 0.13 |
| $C_2/C_3$ ratio | mol/kmol | 30.1 | 0 | 0 | 0 |
| $C_4/C_3$ ratio | mol/kmol | 0 | 42.8 | 44.1 | 44.0 |
| $C_2$ content | wt.-% | 2.0 | 0 | 0 | 0 |
| $C_4$ content | wt.-% | 0 | 4.4 | 4.3 | 4.4 |
| $MFR_2$ | g/10min | 2.1 | 21.5 | 72 | 23.8 |
| **GPR1** | | | | | |
| Temperature | °C | 80 | 80 | 80 | 80 |
| Pressure | kPa | 2500 | 2500 | 2500 | 2500 |
| Split | % | 42 | 54 | 48 | 53 |
| Residence time | h | 1.4 | 1.6 | 1.5 | 1.6 |
| $H_2/C_3$ ratio | mol/kmol | 1.6 | 1.6 | 2.7 | 1.6 |
| $C_2/C_3$ ratio | mol/kmol | 85.5 | 0 | 0 | 0 |
| $C_4/C_3$ ratio | mol/kmol | 0 | 36.1 | 40.3 | 38.0 |
| $C_2$ content | wt.-% | 2.4 | 0 | 0 | 0 |
| $C_4$ content | wt,-% | 0 | 5.4 | 5.6 | 5.6 |
| | | | | | |
| **Final product** | | | | | |
| $MFR_2$ | g/10min | 8* | 20 | 102 | 21 |
| XCS | wt,-% | 0.47 | 0.40 | 0.50 | 0.45 |
| Tm | °C | 137 | 145 | 144 | 146 |
| C2 content | wt.-% | 2.4 | 0 | 0 | 0 |
| $C_4$ content | wt.-% | 0.0 | 5.4 | 5.6 | 5.6 |
| Nucleation | Yes/no | No | No | 2000ppm DMDBS** | 2000ppm DMDBS** |
| Mw/Mn (SEC) | - | 4.2 | 5.1 | 5.2 | 4.9 |
| * visbroken<br>**1,3:2,4-di(3,4-dimethylbenzylidene) sorbitol | | | | | |

The examples IE1 to IE4 and CE1 to CE3 were prepared by compounding on a corotating twin-screw extruder with a screw configuration typical for glass fiber mixing using a temperature range between 200 and 240°C. Compound recipe of the compositions.

| | | IE1 | IE2 | IE3 | IE4 | CE1 | CE2 | CE3 |
|---|---|---|---|---|---|---|---|---|
| base polymer A (RACO) | wt% | 47.5 | | | | 47.5 | | |
| base polymer B (RACO) | wt% | | 47.5 | | 47.5 | | 49.0 | |
| base polymer C (RACO) | wt% | | | 47.5 | | | | |
| Base polymer D (RACO) | wt% | | | | | | | 77.8 |
| GF | wt% | 20 | 20 | 20 | 20 | 20 | 20 | 20 |

(continued)

| | | IE1 | IE2 | IE3 | IE4 | CE1 | CE2 | CE3 |
|---|---|---|---|---|---|---|---|---|
| Slip agent (SLA) | wt% | 0.3 | 0.3 | 0.3 | 0.3 | 0.3 | 0.3 | 0 |
| Stabilizer combination | wt% | 0.2 | 0.2 | 0.2 | 0.2 | 0.2 | 0.2 | 0.2 |
| coupling agent | wt% | 1.5 | 1.5 | 1.5 | 1.5 | 1.5 | | 1.5 |
| carbon black masterbatch | wt% | 0.5 | 0.5 | 0.5 | 0.5 | 0.5 | 0.5 | 0.5 |
| EVA based copolymer | wt% | | | | | 30 | | |
| high pressure polyethylene acrylate copolymer having a density of 910 to 935 kg/m$^3$ with VTMS | wt% | 30 | 30 | 30 | | | 30 | |
| high pressue polyethylene acrylate copolymer having a density of 910 to 935 kg/m$^3$ without VTMS | wt% | | | | 30 | | | |

| | |
|---|---|
| Glass fiber (GF) | chopped strands from Nippon Electric Glass; length 3.0 mm; 10.5 micrometer diameter (values before compounding) |
| Slip agent (SLA) | Fine Organics Finawax E containing erucamide. |
| Stabilizer combination | 67% Irgafox® 168 and 33% Irganox® 1010 |
| Coupling agent | Byk Scona TPPP8112 |
| EVA base copolymer | MFR 3 g/10min; vinyl acetate (VA) 28 wt.-%; density of 950 kg/m$^3$ |
| high pressure polyethylene acrylate copolymer having a density of 910 to 935 kg/m$^3$ with VTMS (HPPE-ACRYL-VTMS) | OE4110SI<br>butyl acrylate (BA) content 9.5 wt.-%<br>vinyl-trimethoxy-silane (VTMS) 1.05 wt.-%<br>MFR2 0.5 g/10min<br>density 922 kg/m$^3$ |
| high pressure polyethylene acrylate copolymer having a density of 910 to 935 kg/m$^3$ without VTMS (HPPE-ACRYL) | OE4117<br>Butyl acrylate (BA) content 17 wt.-%<br>MFR 0.85 g/10min<br>density 924.5 kg/m$^3$ |

The compositions had the following properties/parameters as shown in the following table:

| | | IE1 | IE2 | IE3 | IE4 | CE1 | CE2 | CE3 |
|---|---|---|---|---|---|---|---|---|
| amount RACO | wt.-% | 47.5 | 47.5 | 47.5 | 47.5 | 47.5 | 49.0 | 77.8 |
| nature RACO | | C2C3 | C3C4 | C3C4 | C3C4 | C2C3 | C3C4 | C3C4 |
| Tm (RACO) 135 to 150°C | °C | 137 | 145 | 144 | 145 | 137 | 145 | 146 |
| 1-butene content (RACO) | wt.-% | - | 5.4 | 5.6 | 5.4 | | 5.4 | 5.6 |
| ethylene content (RACO) | wt.-% | 2.4 | | | | 2.4 | | |
| MFR | g/10mi n | 2.7 | 4.9 | 13.3 | 5.8 | 4.6 | 4.3 | 8.0 |
| HPPE-ACRYL-VTMS | wt.-% | 30 | 30 | 30 | | | 30 | |
| HPPE-ACRYL | wt.-% | | | | 30 | | | |
| EVA | wt.-% | | | | | 30 | | |
| GF | wt.-% | 20 | 20 | 20 | 20 | 20 | 20 | 20 |

(continued)

| | | IE1 | IE2 | IE3 | IE4 | CE1 | CE2 | CE3 |
|---|---|---|---|---|---|---|---|---|
| SLA | wt.-% | 0.3 | 0.3 | 0.3 | 0.3 | 0.3 | 0.3 | 0 |
| coupling agent | wt.-% | 1.5 | 1.5 | 1.5 | 1.5 | 1.5 | | 1.5 |
| Tensile mod. | MPa | 2983 | 3450 | 3540 | 3389 | 2840 | 3408 | 4688 |
| Tensile strength | MPa | 50.46 | 57.31 | 60.32 | 55.27 | 45.77 | 48.14 | 82.77 |
| Elongati on at break | % | 8.85 | 6.86 | 5.09 | 6.7 | 7.91 | 3.06 | 3.56 |
| Tc PP | °C | 102 | 115 | 114 | 115 | 103 | 114 | 118 |
| Tc PE | °C | 87 | 87 | 87 | 82 | 53 | 87 | - |
| Tm PP | °C | 137 | 147 | 145 | 147 | 137 | 146 | 146 |
| Hm PP | J/g | 29 | 37 | 37 | 38 | 33 | 38 | 73 |
| Tm PE | °C | 101 | 100 | 100 | 98 | 73 | 101 | - |
| Hm PE | J/g | 26 | 24 | 23 | 16 | 9 | 23 | - |
| Soft touch | | yes | yes | yes | yes | +- | +- | +- |

It can be seen that comparative example CE3 which did not contain a high pressure polyethylene acrylate copolymer did not have sufficiently high elongation at break. Comparative example CE2 which did not contain a coupling agent had an even lower elongation at break. Comparative example CE1 had good elongation at break but suffered from low tensile strength, whereas all inventive examples IE1 to IE4 had acceptable tensile strength values of 50.0 MPa or higher and simultaneously elongation at break of at least 5.0%. The compositions containing the propylene-1-butene random copolymer surprisingly showed better stiffness.

## Claims

**1.** A glass fiber reinforced polypropylene based composition having a melt flow rate (ISO1133, 2.16 kg; 230°C) of 1.0 to 50 g/10min including

a) 40 to 55 wt.-% propylene-1-butene or ethylene-propylene random copolymer having

aa) a melting temperature of 135 to 150°C (DSC; ISO11357-3);
ab) a content of units derived from 1-butene of 3.0 to 9.0 wt.-% or from ethylene of 2.0 to 6.0 wt.-% (determined by NMR spectroscopy)
ac) an melt flow rate (ISO1133, 2.16 kg; 230°C) of 8.0 to 120 g/10min

b) 20 to 40 wt.-% of a high pressure polyethylene acrylate copolymer having a density of 910 to 935 kg/$m^3$ optionally containing units derived from vinyl-trimethoxy-silane;
c) 10 to 30 wt.-% short glass fibers
d) 0.5 - 2.5 wt.% coupling agent;

all amounts with respect to the total weight of the glass fiber reinforced polypropylene based composition.

**2.** The glass fiber reinforced polypropylene based composition according to claim 1 further comprising
e) 0.05 to 0.9 wt.-% slip agent with respect to the total weight of the glass fiber reinforced polypropylene based composition.

**3.** The glass fiber reinforced polypropylene based composition according to claim 1 or 2, wherein the high pressure polyethylene acrylate copolymer contains units derived from butyl acrylate.

**4.** The glass fiber reinforced polypropylene based composition according to any one of the preceding claims, wherein the high pressure polyethylene acrylate copolymer contains units derived from vinyl-trimethoxy-silane.

5. The glass fiber reinforced polypropylene based composition according to any one of the preceding claims, wherein the high pressure polyethylene acrylate copolymer contains

7.0 to 12.0 wt.-% of units derived from butyl acrylate; and/or
0.1 to 4.0 wt.-% of units derived from vinyl-trimethoxy-silane.

6. The glass fiber reinforced polypropylene based composition according to any one of the preceding claims obtainable by compounding a glass fiber having an average fiber length (D50) of 2 to 5 mm.

7. The glass fiber reinforced polypropylene based composition according to any one of the preceding claims containing carbon black pigment.

8. The glass fiber reinforced polypropylene based composition according to any one of the preceding claims, wherein the propylene-1-butene or ethylene-propylene random copolymer has a melting temperature of 141 to 148°C (DSC; ISO11357-3).

9. The glass fiber reinforced polypropylene based composition according to any one of the preceding claims including 40 to 50 wt,-% of a propylene-1-butene random copolymer as the only random copolymer and whereby preferably the content of units derived from 1-butene of said propylene-1-butene random copolymer is 4.0 to 6.0 wt.-%.

10. The glass fiber reinforced polypropylene based composition according to any one of the preceding claims, wherein said composition has at least two melting points, a first melting point within the range of 95 to 103°C and a second melting point within the range of 135 to 150°C (DSC; ISO11357-3).

11. The glass fiber reinforced polypropylene based composition according to any one of the preceding claims having a tensile strength of at least 50.0 MPa and an elongation at break of at least 5.0 % determined according toISO 527-2 (cross head speed 1 mm/min for tensile modulus, 50 mm/min for others) using injection molded specimens molded at 230 °C according to ISO 527-2(1B) produced according to EN ISO 1873-2 (dog 10 bone shape, 4 mm thickness).

12. The glass fiber reinforced polypropylene based composition according to any one of the preceding claims comprising e) 0.05 to 0.9 wt.-% slip agent with respect to the total weight of the glass fiber reinforced polypropylene based composition, wherein the slip agent is an erucamide containing wax.

13. Article comprising the glass fiber reinforced polypropylene based composition according to any one of claims 1 to 12, wherein preferably said glass fiber reinforced polypropylene based composition is present in an amount of at least 98.0 wt.-% with respect to the total weight of the article.

14. The article according to claim 13 being an automotive interior article.

15. Use of the glass fiber reinforced polypropylene based composition according to claims 1 to 12 for replacing leather-polymer composites.

Europäisches Patentamt
European Patent Office
Office européen des brevets

# EUROPEAN SEARCH REPORT

Application Number
EP 22 18 2544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 030 109 B2 (BOREALIS AG [AT]) 24 July 2018 (2018-07-24) * claim 1 * | 1-15 | INV. C08L23/16 C08L23/08 C08F210/02 C08F210/06 C08L51/06 C08F4/6592 C08F2/00 |
| A | EP 1 923 404 B1 (BOREALIS TECH OY [FI]) 14 October 2009 (2009-10-14) * the whole document * | 1-15 | |
| A | EP 3 495 423 A1 (BOREALIS AG [AT]) 12 June 2019 (2019-06-12) * claim 1 * | 1-15 | |
| E | WO 2022/157231 A1 (BOREALIS AG [AT]) 28 July 2022 (2022-07-28) * example 3 * * claims; tables * | 1-15 | |

TECHNICAL FIELDS SEARCHED (IPC)

C08L
C08F

The present search report has been drawn up for all claims

1

| Place of search | Date of completion of the search | Examiner |
|---|---|---|
| Munich | 12 December 2022 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 18 2544

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2022

| Patent document cited in search report | Publication date | Patent family member(s) | Publication date |
|---|---|---|---|
| US 10030109 B2 | 24-07-2018 | BR 112016017887 B1 | 04-05-2021 |
| | | CA 2938228 A1 | 20-08-2015 |
| | | CN 106255718 A | 21-12-2016 |
| | | EA 201600565 A1 | 30-12-2016 |
| | | EP 2907841 A1 | 19-08-2015 |
| | | EP 3105287 A1 | 21-12-2016 |
| | | ES 2674238 T3 | 28-06-2018 |
| | | JP 2017509742 A | 06-04-2017 |
| | | KR 20160110526 A | 21-09-2016 |
| | | MX 352067 B | 08-11-2017 |
| | | US 2017166711 A1 | 15-06-2017 |
| | | WO 2015121160 A1 | 20-08-2015 |
| | | ZA 201604861 B | 30-08-2017 |
| EP 1923404 B1 | 14-10-2009 | AT 445649 T | 15-10-2009 |
| | | CN 101186675 A | 28-05-2008 |
| | | EP 1923404 A1 | 21-05-2008 |
| | | ES 2330130 T3 | 04-12-2009 |
| | | US 2008132657 A1 | 05-06-2008 |
| EP 3495423 A1 | 12-06-2019 | BR 112020007895 A2 | 27-10-2020 |
| | | CA 3079932 A1 | 13-06-2019 |
| | | CN 111344346 A | 26-06-2020 |
| | | EA 202091141 A1 | 09-09-2020 |
| | | EP 3495423 A1 | 12-06-2019 |
| | | ES 2874060 T3 | 04-11-2021 |
| | | JP 6977165 B2 | 08-12-2021 |
| | | JP 2021505699 A | 18-02-2021 |
| | | KR 20200060486 A | 29-05-2020 |
| | | PL 3495423 T3 | 09-08-2021 |
| | | UA 125545 C2 | 13-04-2022 |
| | | US 2020308353 A1 | 01-10-2020 |
| | | WO 2019110545 A1 | 13-06-2019 |
| WO 2022157231 A1 | 28-07-2022 | WO 2022157231 A1 | 28-07-2022 |
| | | WO 2022157234 A1 | 28-07-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3105287 A
- WO 2020239602 A1
- EP 1923404 A1
- WO 2005023908 A1
- EP 3035344 A1
- WO 2013007650 A1


### Non-patent literature cited in the description


- **JEREMIC.** Polyethylene. *Ullmann's Encyclopedia of Industrial Chemistry,* 2014
- **HANS ZWEIFEL.** Plastic Additives Handbook. 2009, 1141-1190
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **KLIMKE, K. ; PARKINSON, M ; PIEL, C. ; KAMINSKY, W. ; SPIESS, H.W. ; WILHELM, M.** *Macromol. Chem. Phys.,* 2006, vol. 207, 382
- **POLLARD, M. ; KLIMKE, K ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198